(19) Europäisches Patentamt
European Patent Office
Office européen des brevets

(11) **EP 1 090 474 B1**

(12) **EUROPEAN PATENT SPECIFICATION**

(45) Date of publication and mention
of the grant of the patent:
**24.11.2004 Bulletin 2004/48**

(21) Application number: **99921037.0**

(22) Date of filing: **26.05.1999**

(51) Int Cl.⁷: $H04L\ 5/06$, $H04L\ 27/26$

(86) International application number:
**PCT/IB1999/000954**

(87) International publication number:
**WO 1999/062215 (02.12.1999 Gazette 1999/48)**

(54) **DIGITAL DEMODULATOR IN A MULTI-CARRIER SYSTEM**

DIGITALER DEMODULATOR IN EINEM MEHRTRÄGERSYSTEM

DEMODULATEUR NUMERIQUE DANS UN SYSTEME MULTI-PORTEUSE

(84) Designated Contracting States:
**AT BE CH CY DE DK ES FI FR GB GR IE IT LI LU MC NL PT SE**

(30) Priority: **26.05.1998 SE 9801842**

(43) Date of publication of application:
**11.04.2001 Bulletin 2001/15**

(73) Proprietor: **Nera ASA**
**5020 Bergen (NO)**

(72) Inventor: **VAHLIN, Anders**
**N-5050 Nesttun (NO)**

(74) Representative: **Hansson, Sven A.**
**Zacco Sweden AB**
**P.O. Box 23101**
**104 35 Stockholm (SE)**

(56) References cited:
**EP-A2- 0 656 705**     **US-A- 5 191 596**
**US-A- 5 699 363**

- **PATENT ABSTRACTS OF JAPAN & JP 08 316 932 A (NIPPON COLUMBIA CO LTD) 29 November 1996**
- **PATENT ABSTRACTS OF JAPAN & JP 08 097 798 A (NIPPON COLUMBIA CO LTD) 12 April 1996**
- **IEEE INTERNATIONAL SYMPOSIUM ON CIRCUITS AND SYSTEMS NORBERT FLIEGE: 'Fir Half-Band Bandpass Filters' vol. SYMP.24, 1991, NEW YORK, pages 256 - 259, XP000384769**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 090 474 B1

**Description**

TECHNICAL FIELD

The present invention relates to a device and a method for demodulation in a system for high-speed transmission of digital information in several carriers. The invention relates in particular to demodulation in multi-carrier systems which make use of Offset Quadrature Amplitude Modulation (OQAM).

STATE OF THE ART

In the transmission of a sequence of symbols in the form of digital data via different transmission media, the symbols need in most cases to be converted into an analogue signal, which takes place by modulation. A known method of modulation is what is known as multi-carrier modulation, in which a number of modulated carriers are used simultaneously in order to transmit a sequence of symbols which may or may not be complex. If the symbols are complex, this means that two number values are transmitted per symbol, which represent the real part and, respectively, the imaginary part of the complex symbol.

A known technique for multi-carrier modulation is what is known as Quadrature Amplitude Modulation (QAM). A disadvantage of QAM is that it can be used in the main on systems using square pulses. In systems using more general pulse shapes, use is therefore often made of what is known as Offset Quadrature Amplitude Modulation (OQAM).

In connection with the QAM/OQAM technique, use is often made of the term symbol interval, which will be used below to designate the time between two consecutive complex symbols in a carrier in a modulator.

A problem connected with transmission of information is that the demodulated signal received may have been subjected to distortion, in which case it is not a good reforming of the transmitted signal. This can be dealt with by a device for compensation after the demodulator. However, such a device requires that the demodulator outputs at least two items of digital data, known as samples, per symbol interval in each carrier. According to what was mentioned above, if the transmitted signals received are complex, two complex samples will be output per symbol interval in each carrier. In order to achieve this in an OQAM system, a great many calculating operations have previously been necessary, which has made such systems expensive and complicated.

JP 08 316932 and JP 08 97798 disclose both OFDM modulators generating complex data with even and cold numbered orthogonal carriers which are subjected to inverse fast Fourier transformation.

DESCRIPTION OF THE INVENTION

The problem solved by the present invention is that of producing a demodulator for use in a multi-carrier system of the OQAM type, which demodulator, with a minimum of calculating operations, generates two samples per symbol interval in each carrier. In a preferred embodiment, the symbols which are transmitted are complex, two complex samples being generated per symbol interval in each carrier.

This problem is solved by the present invention by means of a method and a device in which a demodulator works with double calculating frequency compared with the modulator which has generated the signal, and also the fact that the expression for the output signal which is obtained from the demodulator is rewritten as two expressions which correspond to the output signals from carriers with odd and, respectively, even numbers. The rewritten expressions are in a form which can be calculated by means of inverse Fourier transform (IFFT).

A serial sequence of modulated data, comprising a maximum of N carriers, is received and connected to a serial/parallel converter. The fact that the data contains a maximum of N carriers means that, in the modulated signal, there are N complex samples per symbol interval. The parallel output data from the converter is connected to a filter bank comprising N/2 filters. The filter bank produces output data in two branches. Output data in each branch corresponds to the abovementioned expressions for output signals for carriers with odd and, respectively, even numbers, which means that output data from each branch can be connected to a means for IFFT, by means of which the desired demodulated signal is obtained.

The serial/parallel converter processes N/2 input data items at a time. The demodulator as a whole processes data at a rate which is double the rate at which the modulator which created the signal received by the demodulator works. As the filter bank which forms part of the demodulator produces N/2 output data items in two branches, N items of output data are consequently produced per N/2 input data items received.

BRIEF DESCRIPTION OF THE DRAWINGS

The invention will be described in detail below with the aid of exemplary embodiments and the appended drawings, in which

Fig. 1     shows a basic block diagram of a demodulator in a multi-carrier system of the OQAM type,

Fig. 2     shows the design of a demodulator according to the invention,

Fig. 3     shows a filter for use in a filter bank in a demodulator according to the invention,

Fig. 4     shows a filter bank for use in a demodulator according to the invention, with associated connections, and

Fig. 5     shows a device for phase rotation in a demodulator according to the invention, and

Fig. 6     shows a flow diagram of a method according to the invention.

PREFERRED EMBODIMENTS

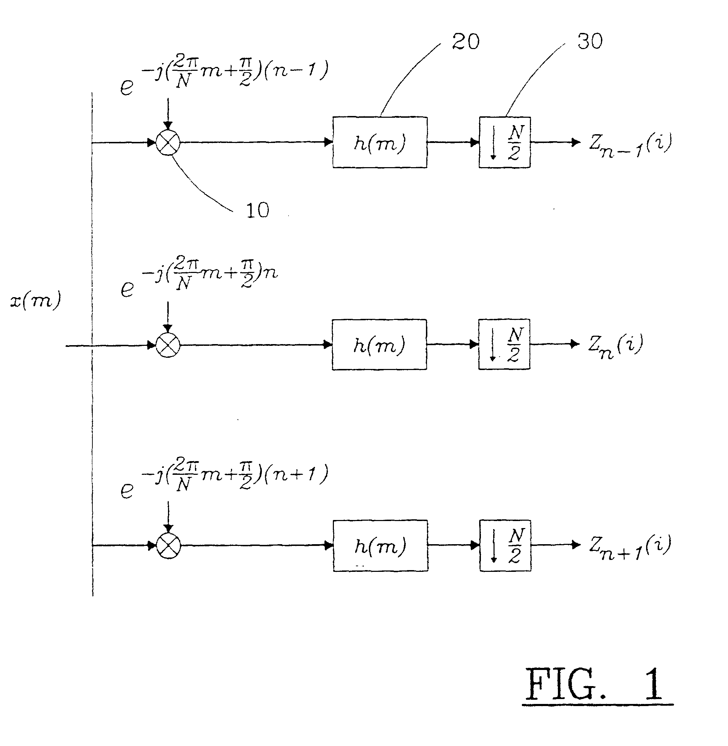

Fig. 1 shows a basic block diagram of a demodulator in a multi-carrier system of the OQAM type. A serial flow x(m) of complex samples enters the demodulator; a maximum of N parallel carriers with digital data can be output from the demodulator.

As can be seen in Fig. 1, the demodulator comprises the following operations for each of the carriers:

- frequency shift, 10
- filtering, 20
- reduction of the number of samples, 30

The output signal from the demodulator in Fig. 1 can be described as

$$z_n(i) = \sum_m h(m)x(i\frac{N}{2} - m)e^{j(\frac{2\pi}{N}m - i\pi - \frac{\pi}{2})n} \tag{1}$$

where h($m$) is the impulse response of the respective filter.

Consider now those of the N carriers which have even numbers. By rewriting expression (1) above, the output signals of the demodulator for these carriers can be described as:

$$z_{2n}(i) = \sum_{m=0}^{N/2-1} \sum_{m'} h(m + m'\frac{N}{2})x(i\frac{N}{2} - m - m'\frac{N}{2})e^{j\frac{2\pi}{N/2}(m - \frac{N}{4})n} \tag{2}$$

Expression (2) can be calculated by means of an N/2 point inverse Fourier transform (IFFT) as

$$z_{2n}(i) = IFFT(C1_i(m) + C2_i(m)) \tag{3}$$

where

$$C1_i(m) = \Sigma\ h(m+N/4+m'\text{N})x(i\text{N}/2-m-\text{N}/4-m'\text{N}) \tag{4}$$

and

$$C2_i(m) = \Sigma\, h(m+m'N-N/4)x(iN/2-m-m'N+N/4) \tag{5}$$

The output signals of those of the N carriers which have odd numbers can be expressed as

$$z_{2n+1}(i) = \sum_{m=0}^{N/2-1} (C1_i(m) - C2_i(m))e^{-j\pi i}e^{j\frac{2\pi}{N}m}e^{j\frac{2\pi}{N/2}mn} \tag{6}$$

Expression (6) can also be expressed by means of an N/2-point IFFT, according to:

$$z_{2n+1}(i) = IFFT((C1_i(m) - C2_i(m))e^{jm2\pi/N}e^{-j\pi i}) \tag{7}$$

where $C1_i(m)$ and $C2_i(m)$ are indicated above.

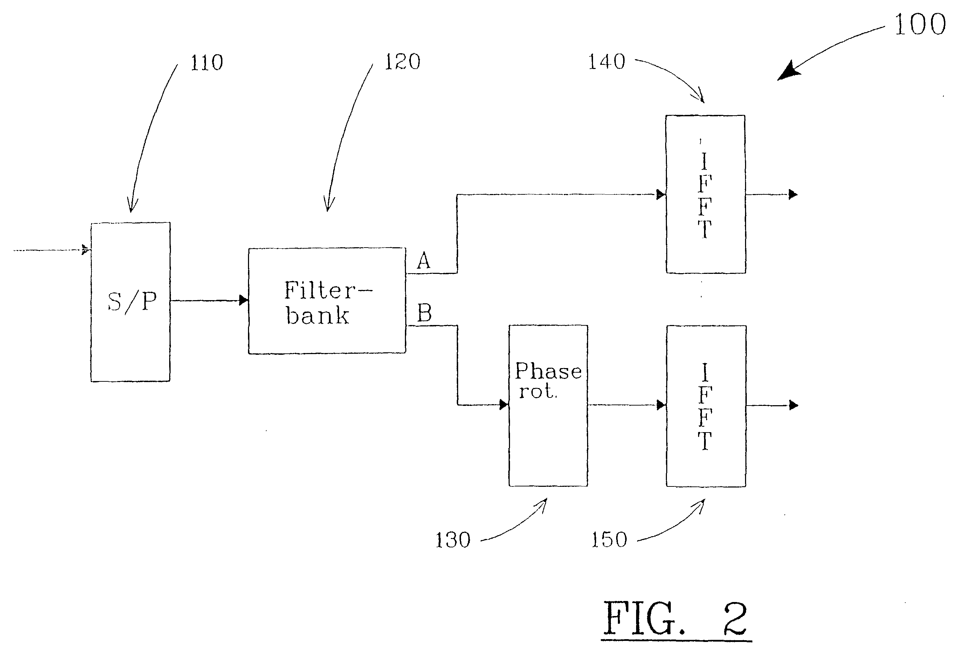

Fig. 2 shows a basic block diagram of a demodulator 100 according to the invention. As can be seen from Fig. 2, the demodulator 100 comprises a serial/parallel converter (S/P) 110, a filter bank 120 which has twice as many outputs as inputs, a means 130 for phase rotation, and also at least one means 140, 150 for IFFT.

The S/P converter 110 takes in N/2 complex samples at a time, where N is the maximum number of carriers in the modulator used to generate the signal, for which reason N is also the number of complex samples per symbol interval in to the demodulator. These N/2 complex samples are then processed in other parts of the demodulator 100, after which a further N/2 complex samples are taken in and processed. All the processing in the demodulator takes place at double the calculating rate used in the modulator used to generate the signal.

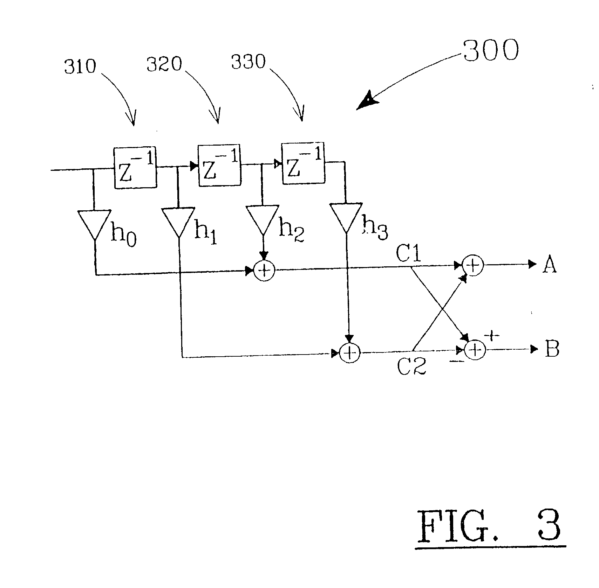

Fig. 3 shows an example of a filter 300 which forms part of the filter bank 120. The filter 300 is complex, in other words the input shown in the drawing can actually receive both the real part and the imaginary part in a complex number, and the two outputs A and B of the filter are also complex, which means that both A and B contain both the real part and the imaginary part. For the sake of clarity, complex signals are shown by a single line in all the drawings.

The filter 300 is what is known as a Finite Impulse Response filter (FIR filter). In the example shown, the FIR filter has N/2 coefficients, numbered $h_0$-$h_{N/2-1}$, and N/2-1 delay elements 310, 320, 330, shown as elements for multiplication by $z^{-1}$. The number of coefficients is to be seen only as an example which can be varied from application to application. How the number of coefficients and the value of the coefficients is determined is well-known to a person skilled in the art, and is not described in greater detail here.

The data obtained at the output A of the filter is the sum of samples from all the delay elements 310, 320, 330 in the filter 300. A therefore corresponds to the sum of C1 and C2 in expressions (4) and (5) above, in other words C1 + C2. In other words, the output data from the filter 300 can be connected to a means for IFFT 140, 150, by means of which the desired function according to expression (3) above is obtained.

As can be seen from Fig. 1, the samples in A are weighted with different coefficients. The selection of these coefficients will not be described in greater detail here, as it is not a fundamental component of the invention.

The data which is obtained at output B of the filter 300 is the difference between the samples in the filter which have been weighted with coefficients with even numbers and the samples in the filter which have been weighted with coefficients with odd numbers, which corresponds to the difference between C1 and C2 in the expressions above, therefore C1-C2. In other words, the output data B from the filter corresponds to expression (7) above, with the exception of the phase rotation.

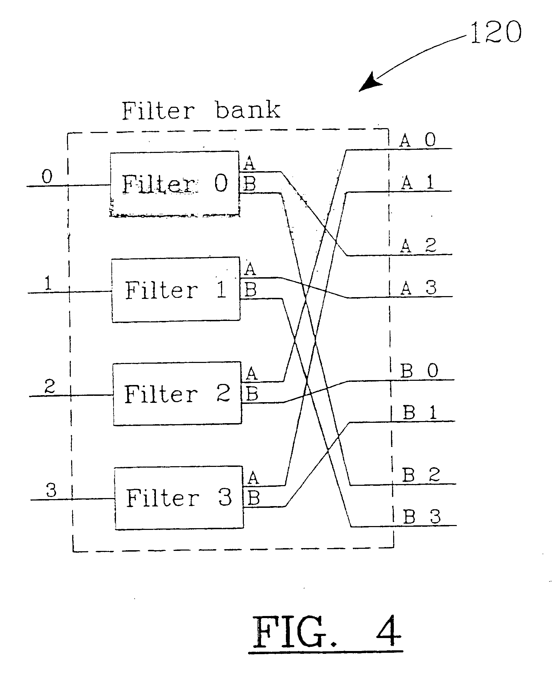

Fig. 4 shows an example of the type of filter bank 120 which forms part of the demodulator 100 according to the invention. The example reflects an embodiment where N = 8. As can be seen from Fig. 4, the filter bank comprises N/2 filters, in this example 4 filters therefore, numbered from 0 to N/2-1. As each filter in the filter bank has two outputs and one input, and the demodulator takes in N/2 complex samples, the filter bank will therefore have N items of output data for N/2 input data.

It can also be seen from Fig. 4 how the connections of output data from each filter 300 in the filter bank 120 are made. Each output of each filter is connected to that output in the filter bank of which the number is the number of the filter minus N/4, reduced modulo N/2. The output of filter number k is therefore connected to output number [(k-N/4) mod (N/2)] of the filter bank.

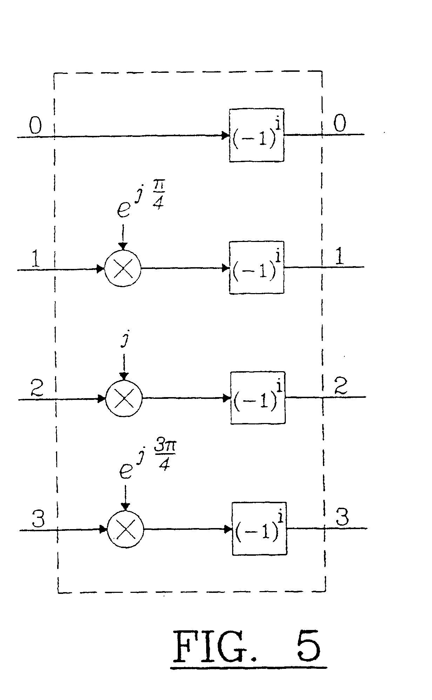

Fig. 5 shows how the phase rotation is brought about. In the example shown in Fig. 5, N = 8, which is only a special case shown for the sake of clarity. On account of the fact that N = 8, the exponent in expression (7) above becomes $e^{jm\pi/4}e^{-j\pi i}$.

The phase rotation is brought about by means of two means for multiplication following one another. The signal is connected first to a means for multiplication by the expression $e^{jm2\pi/N}$ from expression (7) above, and then to a means for multiplication by the expression $e^{-j\pi i}$. As mentioned above, the expression $e^{jm2\pi/N}$ is equal to $e^{jm\pi/4}$ in the example with N = 8. The only remaining variable factor in the exponent is therefore m, which varies from 0 to N/2-1. In a case where N = 8, this therefore means that the exponent varies from 0 to $j3\pi/4$, which can also be seen from Fig. 5.

After the abovementioned multiplication, the signal is connected to a means for multiplication by the expression $e^{-j\pi i}$, which can also be expressed as multiplication by $(-1)^i$.

The thus phase-rotated signal is connected to a means for IFFT 140, 150. This means for IFFT can be the same as that used for the signal A above or a separate means for IFFT.

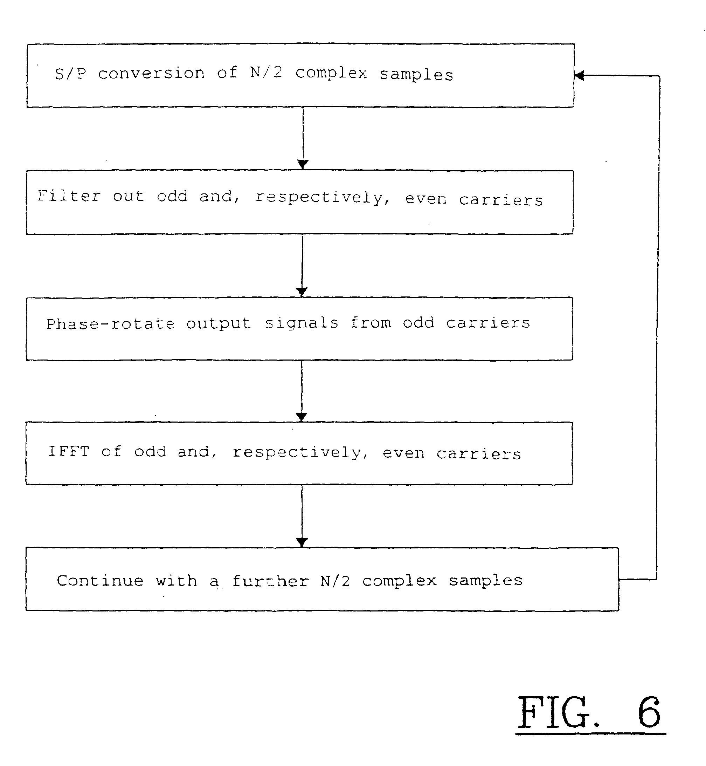

Fig. 6 shows a flow diagram of the main steps in a method according to the invention, which flow diagram follows what has been described above in connection with Figs 2-5.

It should be mentioned that the number of filter coefficients, the number of carriers etc. shown above are only examples of numbers given so as to facilitate the understanding of the invention.

It should also be mentioned that, instead of inverse fast Fourier transform (IFFT), the invention can also make use of fast Fourier transform. In order for it to be possible to use FFT instead of IFFT in the invention, it is necessary for the outputs on the filters in the filter bank to be connected in a manner which is adapted to FFT.

## Claims

1. Device (100) for creating two samples of output data per symbol interval in each carrier in demodulation in a system for serial transmission of digital information in the form of complex symbols by means of multi-carrier Offset Quadrature Amplitude Modulation on a maximum of N carriers, N being an integer, which device comprises means for converting data from serial to parallel form (110), a filter bank (120) and also means for phase rotation (130), which device outputs two samples per symbol received, **characterized in that** it comprises means (120, 300) for separating the output signals which correspond to those of the maximum of N carriers in the input signal which have even numbers from those of the maximum of N carriers which have odd numbers at least one means (140, 150) for inverse Fourier transform (IFFT) of data from carriers with add and respectively, even numbers, and said phase rotation is carried out for data from carriers with add numbers before the IFFT transformation.

2. Method for creating two samples of output data per symbol interval in each carrier in demodulation in an OQAM system which transmits digital information in serial form of complex symbols on a maximum of N carriers, N being an integer, which method comprises:

   - conversion of N/2 complex samples from serial form to parallel form,
   - filtering out data originating from those of the maximum of N carriers with odd and, respectively, even numbers,
   - phase-rotation of data from carriers with odd numbers,
   - transformation by means of IFFT of data from carriers with odd and, respectively, even numbers,

   the method being implemented at a calculating rate which is double the calculating rate in the modulator used to create the signal.

## Patentansprüche

1. Vorrichtung (100) zur Erzeugung zweier Samples von Ausgangsdaten pro Symbolintervall in jedem Träger bei der Demodulation in einem System zur seriellen Übertragung digitaler Informationen in Form komplexer Symbole mittels Mehrträger-Offset-Quadratur-Amplitudenmodulation über maximal N Träger, wobei N eine ganze Zahl ist, welche Vorrichtung Mittel zur Umwandlung von Daten von der seriellen zur parallelen Form (110), eine Filterbank (120) sowie Mittel zur Phasenrotation (130) aufweist, und welche Vorrichtung für jedes empfangene Symbol zwei Samples ausgibt, **dadurch gekennzeichnet, dass** sie Mittel (120, 300) aufweist zur Trennung der Ausgangssignale, die denjenigen der maximal N Träger im Eingangssignal mit geraden Nummern entsprechen, von denjenigen der maximal N Träger mit ungeraden Nummern, mindestens ein Mittel (140, 150) zur inversen Fouriertransformation (IFFT) von Datent von Trägern mit ungeraden bzw. mit geraden Nummern, und dass die Phasenrotation für Daten von Trägern mit ungeraden Nummern vor der IFFT-Transformation durchgeführt wird.

2. Verfahren zur Erzeugung zweier Samples von Ausgangsdaten pro Symbolintervall in jedem Träger bei der Demodulation in einem OQAM-System zur Übertragung digitaler Informationen in serieller Form komplexer Symbole über maximal N Träger, wobei N eine ganze Zahl ist, enthaltend:

- die Umwandlung N/2 komplexer Samples von der seriellen in die parallele Form,
- das Ausfiltern von Daten, welche von denjenigen der maximal N Träger mit ungeraden bzw. mit geraden Nummern stammen,
- die Phasenrotation der Daten von Trägern mit ungeraden Nummern,
- die Transformation mittels IFFT von Daten von Trägern mit ungeraden bzw. geraden Nummern,

wobei das Verfahren mit einer doppelt so hohen Rechengeschwindigkeit durchgeführt wird wie diejenige des Modulators zur Erzeugung des Signals.

**Revendications**

1. Dispositif (100) permettant de créer deux échantillons de données de sortie par intervalle de symbole dans chaque porteuse lors de la démodulation dans un système de transmission sérielle d'informations numériques sous forme de symboles complexes au moyen de la modulation d'amplitude en quadrature avec décalage sur un maximum de N porteuses, N étant un nombre entier, lequel dispositif comprend des moyens de conversion série/parallèle de données (110), un banc de filtres (120) ainsi que des moyens de rotation de phase (130), lequel dispositif délivre deux échantillons par symbole reçu, **caractérisé en ce qu'**il comprend des moyens (120, 300) permettant de séparer les signaux de sortie correspondant à celles parmi le maximum de N porteuses dans le signal d'entrée qui ont des nombres pairs de celles parmi le maximum de N porteuses qui ont des nombres impairs, au moins un moyen (140, 150) pour une transformée de Fourier inverse (IFFT) de données de porteuses ayant des nombres impairs et pairs, respectivement, et que ladite rotation de phase est effectuée avant la transformée IFFT pour les données provenant de porteuses ayant des nombres impairs.

2. Procédé pour la création de deux échantillons de données de sortie par intervalle de symbole dans chaque porteuse lors de la démodulation dans un système OQAM qui transmet des informations numériques sous forme sérielle de symboles complexes sur un maximum de N porteuses, N étant un nombre entier, ledit procédé comprenant:

- la conversion de série en parallèle de N/2 échantillons complexes,
- l'élimination par filtrage des données provenant de celles parmi le maximum de N porteuses qui ont des nombres impairs et pairs, respectivement,
- la rotation de phase des données provenant de porteuses à nombres impairs,
- la transformation par IFFT des données provenant de porteuses à nombres impairs et pairs, respectivement,

le procédé étant mis en oeuvre à une vitesse de calcul double de celle du modulateur utilisé pour créer le signal.

$$e^{-j(\frac{2\pi}{N}m+\frac{\pi}{2})(n-1)}$$

20      30

$x(m)$

$h(m)$      $\downarrow \frac{N}{2}$      $Z_{n-1}(i)$

10

$$e^{-j(\frac{2\pi}{N}m+\frac{\pi}{2})n}$$

$h(m)$      $\downarrow \frac{N}{2}$      $Z_n(i)$

$$e^{-j(\frac{2\pi}{N}m+\frac{\pi}{2})(n+1)}$$

$h(m)$      $\downarrow \frac{N}{2}$      $Z_{n+1}(i)$

FIG. 1

FIG. 2

EP 1 090 474 B1

FIG. 3

EP 1 090 474 B1

120

Filter bank

FIG. 4

FIG. 5

S/P conversion of N/2 complex samples

Filter out odd and, respectively, even carriers

Phase-rotate output signals from odd carriers

IFFT of odd and, respectively, even carriers

Continue with a further N/2 complex samples

FIG. 6